# EUROPÄISCHE PATENTSCHRIFT

(11) **EP 0 993 666 B1**
(45) Veröffentlichungstag und Bekanntmachung des Hinweises auf die Patenterteilung: **18.09.2002**
(21) Anmeldenummer: 98938665.1
(22) Anmeldetag: 27.06.1998
(51) Int. Cl.: G08C 23/04, H04B 10/22

(54) **SIGNALÜBERTRAGUNGSEINRICHTUNG**
SIGNAL TRANSMITTER
DISPOSITIF DE TRANSMISSION DE SIGNAUX

(30) Priorität: 03.07.1997 DE 19728314
(43) Veröffentlichungstag der Anmeldung: 19.04.2000
(73) Patentinhaber: ZF Luftfahrttechnik GmbH, 34379 Calden (DE)
(72) Erfinder: POHL, Bernhard, D-93149 Nittenau (DE)
(74) Vertreter: Zietlow, Karl-Peter
(86) Internationale Anmeldenummer: EP9803938
(87) Internationale Veröffentlichungsnummer: WO99001850

(56) Entgegenhaltungen:
- EP-A- 0 332 244
- EP-A- 0 432 922
- US-A- 4 891 973
- US-A- 5 336 897
- US-A- 5 354 993
- PATENT ABSTRACTS OF JAPAN vol. 006, no. 119 (E-116), 3. Juli 1982 -& JP 57 046543 A (HITACHI LTD), 17. März 1982

## Beschreibung

Die vorliegende Erfindung betrifft eine Signalübertragungseinrichtung, sowie ein Verfahren zur Datenübertragung zwischen einem rotierenden in einem feststehenden System.

Solche Signalübertragungseinrichtungen werden vielfach in der Meßtechnik verwendet, um beispielsweise Meßdaten von einer rotierenden Welle auf eine feststehende Anschlußleitung zu führen.

Ein anderes Anwendungsgebiet sind Hubschrauber, bei denen beispielsweise für eine Einzelblattansteuerung der Rotorblätter Meß- und Steuerdaten zwischen der feststehenden Hubschrauberzelle und dem Rotor ausgetauscht werden.

Ein bekanntes System zur Übertragung von elektrischen Signalen zwischen einem feststehenden und einem rotierenden System, ist ein mechanischer Schleifring mit Schleifkontakten. Ein mechanischer Schleifring unterliegt jedoch einem Verschleiß. Bei mehreren zu übertragenden Datenkanälen wird für die Anordnung der Kontaktspuren ein erheblicher axialer oder radialer Bauraum benötigt. Außerdem wird die gegenseitige Isolation der einzelnen Spuren bei mehreren Datenkanälen sehr aufwendig.

Eine naheliegende Möglichkeit ist, die Daten seriell über nur einen Schleifkontakt zu übertragen. Nachteilig dabei ist, daß die in einem Zeitraum übertragbare Datenmenge kleiner ist als bei einer parallelen Übertragung.

Grundsätzlich sind auch verschiedene Systeme zur berührungslosen -und damit verschleißfreien- Datenübertragung bekannt, wofür beispielsweise optische Sender und Empfänger eingesetzt werden. Als optische Empfänger eignen sich hier insbesondere Fotodioden. Allerdings sind der geometrischen Gestaltung einzelner Fotodioden aus physikalischen und aus Kostengründen Grenzen gesetzt, so daß sich das Prinzip des mechanischen Schleifrings mit seinen geschlossenen ringförmigen Spuren nicht in vorteilhafter Weise auf ein optisches Datenübertragungssystem übertragen läßt. Vorrichtungen und Verfahren zur mehrmaligen optischen Signalübertragung zwischen rotierenden und feststehenden Systemen sind z.B. in JP-A-57046543 und US-A-5354993 beschrieben.

Aufgabe der Erfindung ist es daher eine Anordnung und ein Verfahren zur Übertragung von Daten auf einem oder mehreren Datenkanälen zwischen einem rotierenden System und einem feststehenden System zu schaffen, wobei die Anordnung verschleißfrei ist, und auf kleinem Bauraum eine hohe Datenübertragungsrate zuläßt. Diese Aufgabe wird durch die Vorrichtung nach Anspruch 1 und das Verfahren nach Anspruch 10 gelöst.

Erfindungsgemäß werden auf einem sendenden System, welches das rotierende oder das feststehende sein kann, mehrere Sender und auf einem gegenüberliegenden empfangenden System einer oder mehrere Empfänger angeordnet, wobei die Sender und Empfänger jeweils in ringförmigen Bereichen gleichmäßig verteilt angeordnet sind (in gleichen Winkelabständen voneinander), so daß bei einer vollen Drehung des rotierenden Systems nacheinander jeder Sender jedem Empfänger gegenübersteht. Dabei ist ein Drehwinkelsensor zur Bestimmung des Drehwinkels zwischen rotierendem und feststehendem System sowie eine Senderumschalteinrichtung zur drehwinkelabhängigen Zuordnung von Datenkanälen zu Sendern vorgesehen.

Sender und Empfänger sind in tangentialer Richtung jeweils hintereinander angeordnet. Es gibt also nur eine geometrische Spur pro Übertragungsrichtung auf der alle Datenkanäle übertragen werden. Vorteilhaft ist, daß nur wenig Bauraum benötigt wird, und daß die einzelnen Empfänger relativ klein sind und eine einfache geometrische Form aufweisen können.

Die senderseitig auf den Datenkanälen ankommenden Signale und das Signal des Drehwinkelsensors werden auf die Senderumschalteinrichtung geführt. Von dieser wird drehwinkelabhängig jeder Datenkanal jeweils dem Sender zugeordnet, der demjenigen Empfänger gegenüberliegt, der diesem Datenkanal zugeordnet ist. Bei einer Drehung des rotierenden Systems gegenüber dem feststehenden System steht ein bestimmter Sender einem bestimmten Empfänger nur in einem begrenzten Drehwinkelbereich gegenüber. Die Senderumschalteinrichtung ordnet Datenkanälen zu Sendern abhängig vom Drehwinkelbereich zu.

Eine unterbrechungsfreie Datenübertragung kann in vorteilhafter Weise dadurch erreicht werden, daß die Anzahl der Sender der doppelten Anzahl der Empfänger entspricht, und die tangentiale Erstreckung jedes Empfängers geringfügig größer ist, als der Kreisbogen zwischen zwei benachbarten Sendern. Sender und Empfänger sind jeweils gleichmäßig verteilt, d.h. in gleichen Winkelabständen voneinander im gleichen Radiusbereich angeordnet (bei axialer Anordnung von sendendem und empfangenden System). Durch diese Ausgestaltung der Erfindung wird gewährleistet, daß zu jedem Zeitpunkt jedem Empfänger mindestens ein Sender gegenüberliegt.

Vorteilhaft ist, wenn Sender und Empfänger auf optischer Basis wirken, die Signale also als Lichtsignale übertragen werden. Bei einer optischen Übertragung tritt kein mechanischer Verschleiß auf, und es können aufgrund der hohen Grundfrequenz hohe Übertragungsraten erzielt werden.

LEDs als Sender und Fotodioden als Empfänger sind gebräuchlich und daher kostengünstig.

Bei entsprechend groß gewähltem Durchmesser der Spuren, sind im Bereich der Drehachse keine Funktionselemente des Drehwinkelsensors angeordnet, so daß entlang der Drehachse ein zentraler Durchlaß vorgesehen werden kann. Durch einen solchen zentralen Durchlaß können bei einem Hubschrauberrotor beispielsweise mechanische oder hydraulische Elemente in vorteilhafter Weise hindurchgeführt werden.

Der Drehwinkelsensor muß genau so viele Zustände unterscheiden, wie es Kombinationen von Sendern und Empfängern gibt. Bei 8 Sendern müssen beispielsweise 8 Zustände entsprechend 8 Kreissektoren mit jeweils 45° Sektorwinkel unterscheidbar sein. Vorteilhaft ist, wenn der Drehwinkelsensor ohne aufwendigen Auswertemechanismus oder A/D Wandlung direkt ein digitales Signal erzeugt. Ein Drehwinkelsensor mit beispielsweise als Reflexlichtschranken ausgebildeten Abtastelementen und einer den Abstastelementen gegenüberliegenden Abtastspur unterscheidet beispielsweise zwischen 8 gleich großen Drehwinkelbereichen und liefert ein entsprechendes 3-Bit Signal.

In einer vorteilhaften Ausgestaltung ist die Senderumschalteinrichtung ein entsprechend programmiertes programmierbares Logik IC (z.B. Lattice Typ 1016), in welchem die Auswertelogik sehr kompakt integriert ist. Vorteilhaft ist, daß nur kurze Verzögerungszeiten auftreten, und daß insgesamt nur wenige Kontaktstellen (z.B. Lötstellen) notwendig sind. Ebenso möglich ist auch die Verwendung von einfachen Logik Gattern (TTL), die dann entsprechend zu schalten sind.

Eine erhöhte Übertragungssicherheit kann dadurch erzielt werden, daß senderseitig vor der Senderumschalteinrichtung ein Verzögerungsglied für die ankommenden Signale vorgesehen ist.

Sind sowohl im feststehenden als auch im rotierenden System sowohl Sender als auch Empfänger vorgesehen, wird eine bidirektionale Datenübertragung ermöglicht. Für jede Übertragungsrichtung ist in diesem Fall eine ringförmige Spur vorgesehen, auf der die Sender- und Empfänger angeordnet sind. Es ist jedoch möglich, in diesem Fall nur einen Drehwinkelsensor für beide Übertragungsrichtungen vorzusehen.

Ein besonders kritischer Moment ist, wenn ein Sender den Bereich eines Empfängers verläßt, und der benachbarte Sender in den Bereich eintaucht. Wenn die tangentiale Erstreckung des Empfängers etwas größer ist, als der Kreisbogen zwischen zwei benachbarten Sendern, sind für kurze Zeit zwei Sender im Empfangsbereich, so daß die Umschaltung ohne Signalunterbrechung erfolgen kann. Wird in diesem Zeitbereich an einem beliebigen Zeitpunkt zwischen den Sendern umgeschaltet, kann es zu einer Störung kommen, wenn das Zuschalten und das Abschalten nicht genau gleichzeitig erfolgt. Aus diesem Grund ist es vorteilhaft, wenn erst dann umgeschaltet wird, wenn gerade das Datum "Low" übertragen wird. Sind die Sender LEDs, wird bei "Low" also gerade kein Licht emittiert. Während "Low" anliegt, sendet der noch aktive Sender kein Licht aus, und die Umschaltung auf den nächsten Sender erfolgt. Das nächste "High" wird dann vom dann aktiven Sender übertragen.

Der Zustand "Low" kann zuverlässig folgendermaßen erkannt werden: Der Zustand "Low" wird jeweils durch eine darauffolgende positive Flanke beendet. Das übertragene Signal hat die Eigenschaft, daß "Low" immer für eine bestimmte Mindestdauer anliegt. Während dieser Mindestdauer (Zeitintervall vor einer positiven Flanke) liegt der Zustand "Low" also immer an. Es ist daher vorteilhaft, der Senderumschalteinrichtung sowohl ein unverzögertes als auch ein verzögertes Signal zuzuführen, wobei die Zeitverzögerung nicht größer ist, als die besagte Mindestdauer.

Die Umschaltung von einem Sender auf den nächsten wird durch eine positive Flanke des unverzögerten Signals ausgelöst, während das verzögerte Signal zur Übertragung auf den jeweils zugeordneten Sender geleitet wird.

Allerdings sollte die Verzögerungszeit auch nicht zu klein gewählt werden, so daß für den Umschaltvorgang genügend Zeit bleibt, bevor das nächste "High" übertragen wird. Eine in der Praxis sinnvolle Verzögerungszeit dauert z.B. 30 ns.

Ein einfacher geometrischer Aufbau wird dadurch erzielt, daß die beiden gegeneinander verdrehbaren Teile scheibenförmig ausgebildet sind, und sich axial gegenüberstehen.

Insgesamt wird durch die Erfindung eine verschleißfreie, zuverlässige und kompakte Datenübertragung zwischen einem rotierenden und einem feststehenden System ermöglicht, die sehr vorteilhaft bei einem Hubschrauber zur Datenübertragung zwischen einem Rotor und der Hubschrauberzelle verwendet werden kann.

Die Erfindung wird anhand der beiliegenden Zeichnungen, in denen gleiche Positionen mit gleichen Bezugszeichen versehen sind, näher erläutert. Dabei zeigen:
- Fig. 1: eine kreisförmige Platine mit 8 Sendern und 4 Reflexlichtschranken (sendendes System),
- Fig. 2: eine kreisförmige Platine mit 4 Empfängern und einer Abtastspur (empfangendes System),
- Fig. 3: ein Blockschaltbild der Übertragungsstrecke,
- Fig. 4: ein Signalablaufdiagramm,
- Fig. 5: eine Skizze der geometrischen Abwicklung einer erfindungsgemäßen Anordnung,
- Fig. 6: eine Zuordnungsmatrix von Drehwinkelbereichen und Sender/ Empfänger Kombinationen.

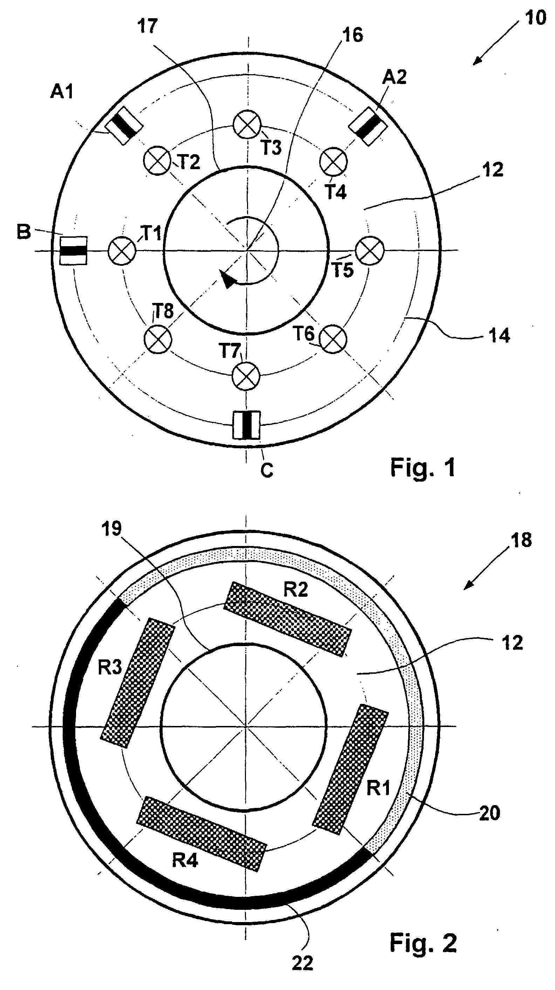

Fig. 1 zeigt schematisch, die geometrische Anordnung von 8 LEDs T1 - T8 und den Reflexlichtschranken A1, A2, B, C auf einer kreisscheibenförmigen Platine 10 des sendenden Systems. Die Platine 10 kann beispielsweise drehfest mit einem Hubschrauberhauptrotor verbunden sein, wobei die Rotationsachse die Platine in dem mit 16 bezeichneten Mittelpunkt orthogonal schneidet. Für einen zentralen Durchlaß weist die Platine 10 im Bereich der Drehachse eine Bohrung 17 auf.

Die 8 als optische Sender wirkenden LEDs sind in jeweils gleichen Winkelabständen von 45° voneinander auf einem mit 12 bezeichneten Kreisradius angeordnet. Die LEDs T1 - T8 weisen eine bestimmte radiale Erstreckung auf, so daß entlang des Kreisradius 12 ein ringscheibenförmiger Bereich entsteht, in dem die LEDs angeordnet sind.

Auf einem zweiten Kreisradius 14 sind die Reflexlichtschranken A1, A2, B, C eines Drehwinkelsensors angeordnet.

Fig. 2 zeigt schematisch eine Platine 18 eines empfangenden Systems, auf dem 4 Fotodioden R1 - R4 und eine Abtastspur angeordnet sind. Die Abtastspur weist einen lichtreflektierenden Teil 20 und einen lichtabsorbierenden Teil 22 auf und ist im selben Radiusbereich angeordnet, wie die Reflexlichtschranken auf der Platine 10 (Fig. 1). Die als optische Empfänger wirkenden Fotodioden R1 - R4 sind im gleichen radialen Abstand von der Scheibenmitte, d.h. im selben ringscheibenförmigen Bereich, angeordnet, wie die LEDs T1 - T8 des sendenden Systems 10 (Fig. 1). Mit 19 ist eine Bohrung für einen zentralen Durchlaß bezeichnet.

Im montierten Zustand stehen sich die dargestellten Ansichten der beiden Platinen 10, 18 deckungsgleich mit einem geringen axialen Abstand gegenüber, so daß die Sender (LEDs) T1 - T8 mit den Empfängern (Fotodioden) R1 - R4 zusammenwirken und die Reflexlichtschranken A1, A2, B, C mit der Abtastspur 20, 22. Bei einer vollen Umdrehung des rotierenden Systems gegenüber dem feststehenden System steht also nacheinander jeder der Sender T1 - T8 jedem der Empfänger R1 - R4 gegenüber. Beispielsweise kann das rotierende System gleich dem sendenden System 10 und das feststehende System gleich dem empfangenden System 18 sein. Ohne Einschränkung ist jedoch auch der umgekehrte Fall möglich, bei dem das rotierende System gleich dem empfangenden System 18 und das feststehende System gleich dem sendenden System 10 ist. Für eine bidirektionale Datenübertragung sind sowohl im feststehenden System als auch im rotierenden System jeweils Sender und Empfänger vorgesehen. Sender und Empfänger eines Systems sind dabei in verschiedenen ringförmigen Bereichen angeordnet.

Für die Erfindung ist es nicht wesentlich, daß sich die beiden Systeme wie dargestellt axial gegenüberstehen. Es ist ebenfalls eine radiale Anordnung denkbar, bei der die Übertragung in radialer Richtung zwischen einer äußeren Hohlwelle und einer darin angeordneten Welle erfolgt.

Die Reflexlichtschranken A1, A2, B, C und die gegenüberliegenden Abtastspur sind Teile eines Drehwinkelsensors. Der Aufbau und die Funktionsweise dieses sogenannten Drehwinkelsensors sind jedoch nicht Gegenstand dieser Erfindung. Die wesentliche Funktion dieses Drehwinkelsensors ist, daß auf einfache Weise acht, jeweils 45° umschließende Kreissektoren voneinander unterschieden werden können. Bei einer Verdrehung der Platine 10 (sendendes System) gegenüber der Platine 18 (empfangendes System) überstreicht jeweils eine der Reflexlichtschranken A1, A2, B, C eine Grenze zwischen reflektierendem Bereich 20 und absorbierendem Bereich 22 der Abtastspur. Der Ausgang der jeweiligen Reflexlichtschranke ändert sich dabei. Die Reflexlichtschranken sind an den Drehwinkelstellungen 0° , 45°, 135° und 270° angeordnet. Die Ausgänge der Reflexlichtschranken an den Drehwinkelstellungen 45° (A1) und 135° (A2) sind durch ein Logikgatter mit einer "Exklusiv Oder" Verknüpfung miteinander verknüpft. Sie bilden zusammen mit den Ausgängen der Reflexlichtschranken an den Drehwinkelstellungen 0° (B) und 270° (C) ein 3-Bit Signal. Jeder Wert dieses Signals entspricht einem der 8 Drehwinkelbereiche.

In der in den Figuren 1 und 2 dargestellten Ausführungsform der Erfindung stehen 8 Sender (LEDs) T1 - T8 4 Empfängern (Fotodioden) R1 - R4 gegenüber. Die Tangentiale Erstreckung jedes Empfängers ist etwas größer als der Kreisbogen zwischen zwei benachbarten Sendern. Dadurch wird der Vorteil erzielt, daß in einem bestimmten Winkelbereich jeweils 2 Sender auf einen Empfänger einwirken. Wird in diesem Winkelbereich von dem einen Sender auf den anderen umgeschaltet, bleibt die Datenübertragung unterbrechungsfrei. Bei 8 Sendern und 4 Empfängern hat sich ein Wert für den Winkelbereich der tangentialen Erstreckung der Empfänger von 49° als vorteilhaft erwiesen.

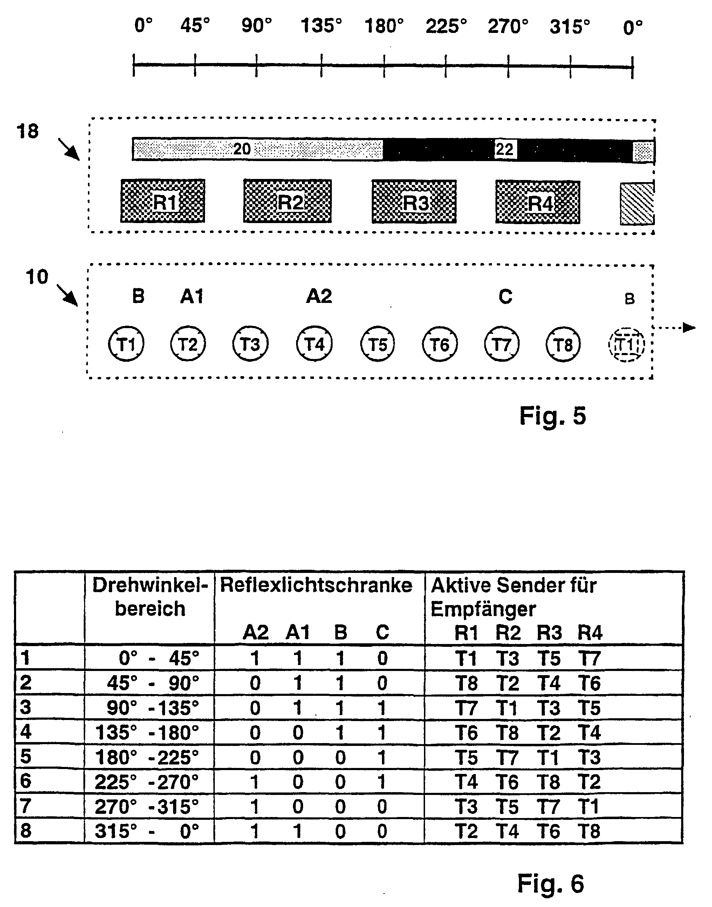

Fig. 5 zeigt eine Skizze der geometrischen Abwicklung der Anordnungen gemäß den Figuren 1 und 2. In der Abwicklung entspricht eine Drehung des sendenden Systems 10 gemäß der in Fig. 1 durch einen Pfeil gekennzeichneten Drehrichtung einer Relativbewegung des sendenden Systems 10 gegenüber dem empfangenden System 18 nach rechts. Dabei ist zu beachten, daß sich die Ansichten von Fig. 1 und Fig. 2 im montierten Zustand gegenüberstehen. In der in Fig. 5 dargestellten Stellung befinden sich jeweils 2 Sender gleichzeitig im Bereich eines Empfängers. Die Reflexlichtschranke B ist gerade an der Grenze vom absorbierenden Bereich 22 zum reflektierenden Bereich 20. Wird entsprechend der Pfeilrichtung um 22,5° weiterbewegt, so wandern die Sender T2, T4, T6 und T8 aus dem Empfangsbereich der Empfänger R1, R2, R3 und R4, so daß der Sender T1 dem Empfänger R1, der Sender T3 dem Empfänger R2, der Sender T5 dem Empfänger R3 und der Sender T7 dem Empfänger R4 mittig gegenübersteht. Diese Stellung ist die Mittelstellung des Drehwinkelbereichs 1 (0° - 45°) der Tabelle gemäß Fig. 6. Die in der letzten Spalte von Fig. 6 angegebenen Sender T1, T3, T5, T7 sind aktiv, während die Sender T2, T4, T6, T8 gerade nicht aktiv sind.

Wird um weitere 22,5° weitergedreht, sind wiederum jeweils 2 Sender im Empfangsbereich jedes Empfängers und es muß erneut eine Senderumschaltung erfolgen.

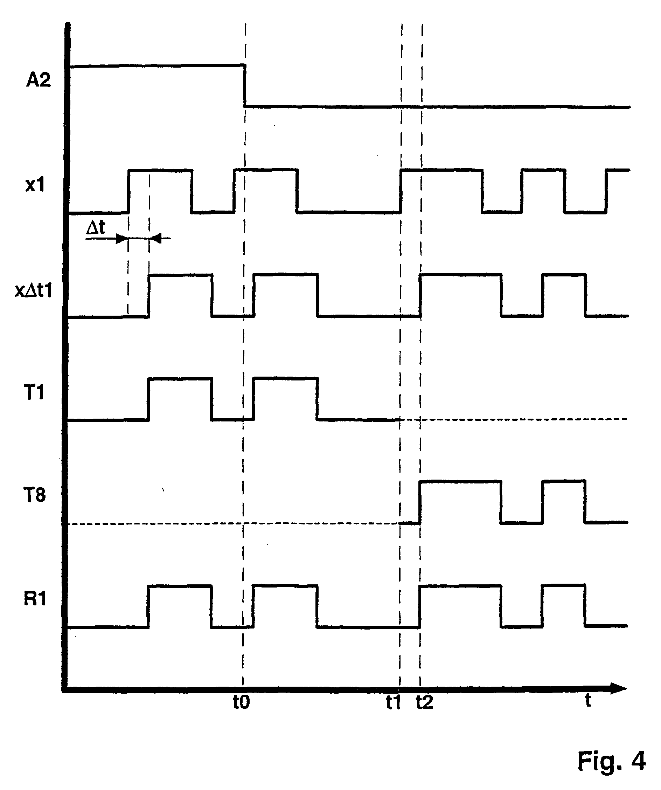

Anhand Fig. 4 soll der Umschaltvorgang an dieser Drehstellung erläutert werden. Im Bereich des Empfängers R1 befinden sich gerade die Sender T1 und T8. Der noch aktive Sender T1 wird bei einer weiteren Drehung den Empfängerbereich verlassen, während der noch nicht aktive Sender T8 erst am Anfang des vom Empfänger R1 überdeckten Winkelbereichs steht. Die Reflexlichtschranke A2 des Drehwinkelsensors befindet sich gerade an der Grenze vom reflektierenden Bereich 20 der Abtastspur zum absorbierenden Bereich 22. Es soll nun vom Sender T1 auf den Sender T8 umgeschaltet werden.

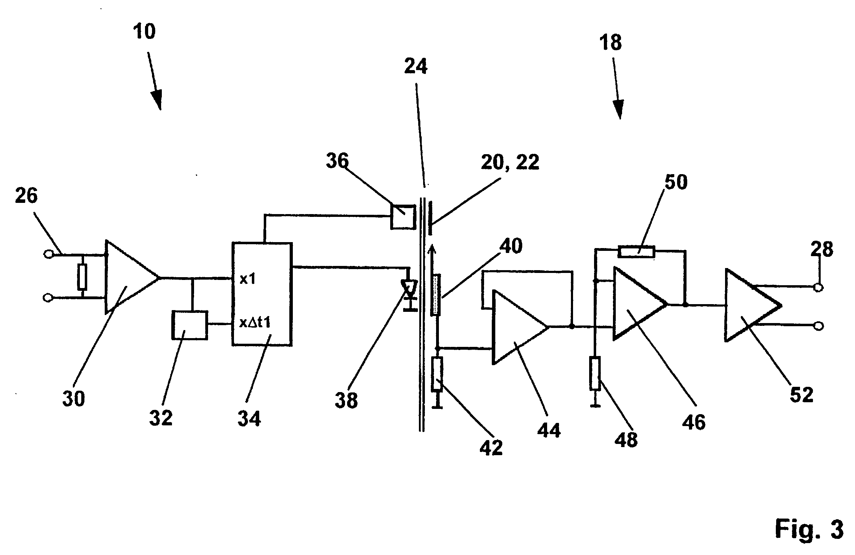

Mit x1 ist eines der 4 senderseitigen Eingangssignale der Senderumschalteinrichtung 34 (Fig. 3) bezeichnet. Die Senderumschalteinrichtung 34 hat außerdem einen Eingang für das durch ein Verzögerungsglied 32 um die Zeit Δt verzögerte Signal xΔt1 und einen weiteren Eingang von der Reflexlichtschranke A2 (36). Das unverzögerte Signal x1 dient zur Senderumschaltung, während das verzögerte Signal xΔt1 auf den jeweiligen Sender geführt und übertragen wird.

Zum Zeitpunkt t0 tritt die Reflexlichtschranke A2 in den absorbierenden Teil 22 der Abtastspur ein. Ihr Ausgang wechselt von "High" auf "Low". Dies ist die erste Bedingung für die Senderumschaltung. Die zweite Bedingung für die Senderumschaltung wird zum Zeitpunkt t1 erfüllt: Am unverzögerten Signal x1 tritt ein Wechsel von "Low" auf "High", also eine positive Flanke auf. Das Signal hat die Eigenschaft, daß ein Zustand "Low" oder "High" immer für eine bestimmte Mindestdauer anliegt. Wird also beim unverzögerten Signal x1 eine positive Flanke erkannt, so kann zuverlässig darauf geschlossen werden, daß beim verzögerten Signal xΔt1 der Zustand "Low" noch für die Dauer der Verzögerungszeit Δt anliegt, wenn die Zeitverzögerung nicht größer ist, als die besagte Mindestdauer.

Zum Zeitpunkt t1 sind also die Bedingungen für die Senderumschaltung von T1 auf T8 erfüllt und sie kann erfolgen. Der Sender T1 wird abgeschaltet und der Sender T8 zugeschaltet. Die Senderumschalteinrichtung 34 ist beispielsweise ein programmierbarer Logik IC (PAL), in dem die Auswertelogik abgelegt ist. Die Umschaltung erfolgt also während gerade ein "Low" übertragen wird und ist daher unempfindlich gegenüber unterschiedlichem Zeitverhalten der einzelnen Sender. Wenn während einem "High" umgeschaltet würde, und der zuschaltende Sender beispielsweise etwas später anspräche als der abschaltende, würde es zu einer Signalunterbrechung führen, so daß auf der Empfängerseite fälschlicherweise ein "Low" erkannt würde.

Vom Zeitpunkt t1 bis zum Zeitpunkt t2 bleibt genügend Zeit für die eigentliche Umschaltung, so daß zum Zeitpunkt t2 die nächste positive Flanke, die ein Aufleuchten der Sender-LED T8 bewirkt, zuverlässig übertragen werden kann.

Am Empfänger R1 kommt das Signal mit einer kleinen, im wesentlichen der Verzögerungszeit Δt entsprechenden, Verzögerung an.

Eine Voraussetzung für das Funktionieren der Signalübertragungseinrichtung ist, daß in dem für die Senderumschaltung in Frage kommenden Zeitbereich auch tatsächlich ein "Low" übertragen wird. Es wird vorausgesetzt, daß die zu übertragenden Signale diese Eigenschaft haben.

Fig. 3 zeigt schließlich ein Blockschaltbild einer erfindungsgemäßen Signalübertragungsrichtung. Die einzelnen Signale 26 werden senderseitig auf den Leitungsempfänger 30 geführt. Die Senderumschalteinrichtung 34 empfängt sowohl die unverzögerten Signale, als auch die durch das Verzögerungsglied 32 verzögerten Signale. Abhängig vom Drehwinkelbereich, der von den einzelnen Reflexlichtschranken 36 (A1, A2, B, C) detektiert wird, steuert sie die jeweils richtigen Sender 38 an.

Zwischen dem sendenden System 10 und dem empfangenden System 18 befindet sich die optische Übertragungsstrekke 24. Empfängerseitig befindet sich die Abtastspur 20,22 gegenüber den Reflexlichtschranken 36 und die Fotodioden 40 (Empfänger R1, R2, R3, R4) gegenüber den Sender-LEDs 38 (T1 - T8).
Die Widerstände 42, 48, 50 sind notwendig für eine hohe Qualität der Signale. Die empfangenen Signale werden vom Verstärker 44 verstärkt und über den Komparator 46 dem Leitungstreiber 52 zugeleitet, welcher für jeden Datenkanal einen Signalausgang 28 aufweist.

Die Vorteile der Erfindung sind unabhängig von der Anzahl der zu übertragenden Datenkanäle. Beispielsweise ist es möglich, 5 Datenkanäle zu übertragen, wenn hierfür 10 Sender und 5 Empfänger vorgesehen werden, und vom Drehwinkelsensor 10 Winkelbereiche unterscheidbar sind.

### Bezugszeichen

- T1: Sender (LED)
- T2: Sender (LED)
- T3: Sender (LED)
- T4: Sender (LED)
- T5: Sender (LED)
- T6: Sender (LED)
- T7: Sender (LED)
- T8: Sender (LED)
- R1: Empfänger (Fotodiode)
- R2: Empfänger (Fotodiode)
- R3: Empfänger (Fotodiode)
- R4: Empfänger (Fotodiode)
- A1: Reflexlichtschranke
- A2: Reflexlichtschranke
- B: Reflexlichtschranke
- C: Reflexlichtschranke
- 10: Platine, sendendes System
- 12: Spur, Datenübertragung
- 14: Spur, Drehwinkelsensor
- 16: Drehzentrum
- 17: Bohrung
- 18: Platine, empfangendes System
- 19: Bohrung
- 20: Abtastspur, reflektierend
- 22: Abtastspur, absorbierend
- 24: optische Übertragungsstrecke
- 26: Signaleingang
- 28: Signalausgang
- 30: Leitungsempfänger
- 32: Verzögerungsglied
- 34: Senderumschalteinrichtung (PAL)
- 36: Reflexlichtschranke (A1, A2, B oder C)
- 38: LED (T1, T2, T3, T4, T5, T6, T7 oder T8)
- 40: Fotodiode (R1, R2, R3 oder R4)
- 42: Widerstand
- 44: Verstärker
- 46: Komparator
- 48: Widerstand
- 50: Widerstand
- 52: Leitungstreiber

## Patentansprüche

1. Signalübertragungseinrichtung zur Übertragung von Daten auf einem oder mehreren Datenkanälen zwischen einem rotierenden System und einem feststehenden System, wobei auf einem sendenden System (10), welches das rotierende oder das feststehende sein kann, mehrere Sender (T1 - T8) und auf einem gegenüberliegenden empfangenden System (18) ein oder mehrere Empfänger (R1 - R4) angeordnet sind, wobei die Sender und Empfänger jeweils auf ringförmigen Bereichen gleichmäßig verteilt angeordnet sind, so daß bei einer vollen Drehung des rotierenden Systems nacheinander jeder Sender jedem Empfänger gegenübersteht, mit einem Drehwinkelsensor (A1, A2, B, C, 20, 22) zur Bestimmung des Drehwinkels zwischen rotierendem und feststehendem System und einer Senderumschalteinrichtung (34) zur drehwinkelabhängigen Zuordnung von Datenkanälen zu Sendern, **dadurch gekennzeichnet, daß** senderseitig vor der Senderumschalteinrichtung (34) ein Verzögerungsglied (32) für ankommende Signale vorhanden ist.

2. Signalübertragungseinrichtung nach Anspruch 1, **dadurch gekennzeichnet, daß** die Anzahl der Sender (T1 - T8) der doppelten Anzahl der Empfänger (R1 - R4) entspricht, und die tangentiale Erstreckung jedes Empfängers geringfügig größer ist, als der Kreisbogen zwischen zwei benachbarten Sendern.

3. Signalübertragungseinrichtung nach Anspruch 1 oder 2, **dadurch gekennzeichnet, daß** die Sender (T1 - T8) optische Sender und die Empfänger (R1 - R4) optische Empfänger sind.

4. Signalübertragungseinrichtung nach Anspruch 3, **dadurch gekennzeichnet , daß** die optischen Sender (T1 - T8) LEDs sind und die optischen Empfänger (R1 - R4) Fotodioden sind.

5. Signalübertragungseinrichtung nach einem der Ansprüche 1 bis 4, **dadurch gekennzeichnet, daß** der Drehwinkelsensor mehrere Abtastelemente (A1, A2, B, C) und eine den Abtastelementen gegenüberliegende geschlossene Codespur (20, 22) aufweist, so daß eine, der Senderanzahl entsprechende Anzahl von gleichgroßen Drehwinkelbereichen unterscheidbar ist.

6. Signalübertragungseinrichtung nach Anspruch 5 **dadurch gekennzeichnet, daß** acht Sender und vier Empfänger vorhanden sind, und daß der Drehwinkelsensor auf einem ersten Teil (10) jeweils ein Abtastelement an den Drehwinkelstellungen 0° (B), 45° (A1), 135° (A2), 270° (C) aufweist, und die Codespur in zwei verschiedene jeweils 180° umschließende Bereiche (20, 22) unterteilt ist, und daß ein Logikgatter mit einer "Exklusiv Oder" Verknüpfung vorhanden ist, durch den die Ausgänge der Abtastelemente an den Drehwinkelstellungen 45° (A1) und 135° (A2) verknüpft sind.

7. Signalübertragungseinrichtung nach einem der Ansprüche 1 bis 6, **dadurch gekennzeichnet, daß** die Senderumschalteinrichtung (34) ein programmierbarer Logik IC ist.

8. Signalübertragungseinrichtung nach einem der Ansprüche 1 bis 7 **dadurch gekennzeichnet, daß** zur bidirektionalen Datenübertragung sowohl im feststehenden als auch in rotierenden System jeweils Sender und Empfänger vorhanden sind.

9. Signalübertragungseinrichtung nach einem der Ansprüche 1 bis 8 dadurch gekennzeíchnet, daß das drehende System in einem Hubschrauberrotor und das feststehende System in einer Hubschrauberzelle angeordnet ist.

10. Verfahren zur - insbesondere optischen - Übertragung von Daten auf einem oder mehreren Datenkanälen mit einer Signalübertragungseinrichtung nach einem der Ansprüche 1 bis 9 wobei die senderseitig auf den Datenkanälen ankommenden Signale und das Signal des Drehwinkelsensors auf die Senderumschalteinrichtung (34) geführt werden, und von der Senderumschalteinrichtung jeder Datenkanal jeweils. dem Sender zugeordnet wird, der in einem bestimmten Drehwinkelbereich dem diesem Datenkanal zugeordneten Empfänger gegenüberliegt, **dadurch gekennzeichnet, daß** die Umschaltung eines Datenkanals von einem Sender auf den nächsten Sender dann erfolgt, wenn ein bestimmter Drehwinkel überschritten wird, und auf dem Datenkanal das Datum "Low" übertragen wird, daß der Senderumschalteinrichtung (34) die auf den Datenkanälen ankommenden Signale sowohl unverzögert (x1 als auch durch das Verzögerungsglied verzögert (xΔt1) zugeführt werden, daß die Umschaltung von einem Sender (T1) auf den nächsten Sender (T8) durch eine positive Flanke des unverzögerten Signals ausgelöst wird, und daß das verzögerte Signal auf den jeweils zugeordneten Sender geleitet wird.

## Claims

1. A signal transmitter for transmitting data through one or several data channels between a rotating system and a stationary system. Several transmitters (T1 -T8) are arranged in a transmitting system (10), which may be the rotating or the stationary system, and one or more receivers (R1 - R4) are arranged in an opposite receiving system (18). The transmitters and receivers are evenly distributed in ring-shaped areas in a manner that in the process of a full rotation of the rotating system each transmitter one after the other gets to face each receiver. An angle-of-rotation sensor (A1, A2, B, C, 20, 22) determines the angle of rotation between the rotary and the stationary systems and a transmitter switching device (34) is used for rotation angle-dependent allocation of data channels, **characterized**
**in that** a delay element (32) for incoming signals is arranged upstream of the transmitter switching device on the transmitting end.

2. A signal transmitter according to claim 1, **characterized**
**in that** the number of transmitters (T1 -T8) corresponds to twice the number of receivers (R1 - R4) and that the tangential extension of each receiver is only marginally in excess of the arc between two neighboring transmitters.

3. A signal transmitter according to claim 1 or 2, **characterized**
**in that** the transmitters (T1 -T8) are optical transmitters and the receivers (R1 - R4) are optical receivers.

4. A signal transmitter according to claim 3, **characterized**
**in that** the optical transmitters (T1 - T8) are LEDs and the optical receivers (R1 - R4) are photodiodes.

5. A signal transmitter according to one of the claims 1 to 4 , **characterized**
**in that** the angle-of-rotation sensor features several sampling elements (A1, A2, B, C) and opposite of them a code track (20, 22), which allows differentiation of a number of rotation angle areas of equal size corresponding to the number of transmitters.

6. A signal transmitter according to claim 5, **characterized**
**in that** there are eight transmitters and four receivers and that on a first part (10) of the angle-of-rotation sensor there is one sampling element for each rotation angle position 0° (B), 45° (A1), 135° (A2), 270° (C), and that the code track is divided into two different areas (20, 22), each covering 180°, and that there is a logic gate with an exclusive OR operation, through which the outputs of the sampling elements are connected at the angle-of-rotation positions 45° (A1) and 135° (A2).

7. A signal transmitter according to one of the claims 1 to 6, characterized the transmitter switching device (34) is a programmable logic IC.

8. A signal transmitter according to one of the claims 1 to 7, **characterized**
**in that** the stationary and the rotating systems feature transmitters and receivers for bidirectional data transmission.

9. A signal transmitter according to one of the claims 1 to 8, **characterized**
**in that** the rotating system is arranged in a helicopter rotor and the stationary system is arranged in a helicopter cell.

10. A method for - optical - transmission of data through one or several data channels by means of a signal transmitter according to one of the claims 1 to 9, whereby the transmitter signals and the signal of the angle-of-rotation sensor are transmitted to the transmitter switching device (34), which assigns the data channels to the respective transmitters opposite the respective receivers in a certain angle-of-rotation range, **characterized**
**in that** switchover of a data channel from one transmitter to the next is effected when a certain angle of rotation is exceeded and the datum "low" is transmitted on the data channel; that the signals coming in on the data channels are transmitted to the transmitter switching device (34) undelayed (x1) as well as delayed by the delay element (x Δ t1); that the switchover from one transmitter (T1) to the next sender (T8) is triggered by a positive edge of the undelayed signal; and that the delayed signal is transmitted to the transmitter, assigned.

## Revendications

1. Dispositif de transmission de signaux pour la transmission de données sur un ou plusieurs canaux de données, entre un système en rotation et un système stationnaire, sachant que sur un système émettant des signaux (10), qui peut être soit le système en rotation soit le système stationnaire, sont disposés plusieurs émetteurs (T1 - T8) et sachant que sur un système de réception (18) positionné en face du système émettant des signaux sont disposés un ou plusieurs récepteurs (R1 - R4), sachant que les émetteurs et les récepteurs sont respectivement disposés de façon uniforme dans des zones réalisées en forme annulaire de façon à ce que, à chaque rotation complète du système en rotation, chaque émetteur se trouve, au fur et à mesure, en face de chaque récepteur ; ce système de transmission de signaux étant doté d'un capteur d'angles de rotation (A1, A2, B, C, 20, 22) pour déterminer l'angle de rotation entre le système stationnaire et le système en rotation, et d'un dispositif de commutation d'émetteurs (34) pour l'association de canaux de données à des émetteurs en fonction de l'angle de rotation, **caractérisé en ce que** du côté de l'émetteur et en amont du dispositif de commutation d'émetteurs (34) se trouve un opérateur à retard (32) pour des signaux arrivants.

2. Dispositif de transmission de signaux selon la revendication 1, **caractérisé en ce que** le nombre d'émetteurs (T1 - T8) correspond au double des récepteurs (R1 - R4) et **en ce que** la prolongation tangentielle de chaque récepteur est légèrement plus importante que l'arc de cercle entre deux émetteurs juxtaposés.

3. Dispositif de transmission de signaux selon la revendication 1, **caractérisé en ce que** les émetteurs (T1 - T8) sont des émetteurs optiques et **en ce que** les récepteurs (R1 - R4) sont des récepteurs optiques.

4. Dispositif de transmission de signaux selon la revendication 3, **caractérisé en ce que** les émetteurs optiques (T1 - T8) sont des diodes électro-lumiscentes et **en ce que** le récepteurs optiques (R1 - R4) sont des diodes photoélectriques.

5. Dispositif de transmission de signaux selon une des revendications 1 à 4, **caractérisé en ce que** le capteur d'angles de rotation est doté de plusieurs éléments de balayage (A1, A2, B, C) et d'une voie codée fermée et située en face des éléments de balayage, de façon à ce qu'on puisse différencier un nombre de sections d'angle de rotation de même dimension correspondant au nombre d'émetteurs.

6. Dispositif de transmission de signaux selon la revendication 5, **caractérisé en ce que** sont présents huit émetteurs et quatre récepteurs et **en ce que** le capteur d'angles de rotation comporte dans une première partie (10) respectivement un élément de balayage sur les positions d'angle de rotation 0° (B), 45° (A1), 135° (A2) et 270° (C), et **en ce que** la voie codée est répartie en deux sections différentes englobant respectivement des sections de 180° (20, 22), et **en ce qu'**il y a une grille logique comportant un circuit "OU exclusif" à l'aide duquel les sorties des éléments de balayage sont connectées aux positions d'angle de rotation 45° (A1) et 135° (A2).

7. Dispositif de transmission de signaux selon une des revendications 1 à 6, **caractérisé en ce que** le dispositif de commutation d'émetteurs (34) est un circuit intégré logique et programmable.

8. Dispositif de transmission de signaux selon une des revendications 1 à 7, **caractérisé en ce que** pour la transmission de données bidirectionnelle soit dans le système stationnaire soit dans le système en rotation sont présents des émetteurs et des récepteurs.

9. Dispositif de transmission de signaux selon une des revendications 1 à 8, **caractérisé en ce que** le système en rotation est disposé dans un rotor d'hélicoptère et le système stationnaire est disposé dans une cellule d'hélicoptère.

10. Méthode de transmission de données, en particulier méthode de transmission de données optique, sur un ou plusieurs canaux de données au moyen d'un dispositif de transmission de signaux selon une des revendications 1 à 9, sachant que les signaux arrivants côté émetteur sur les canaux de données et le signal du capteur d'angle de rotation sont amenés au dispositif de commutation d'émetteurs (34), et sachant qu'à partir du dispositif de commutation d'émetteurs chaque canal de données est associé respectivement à l'émetteur se trouvant, dans une section d'angle de rotation prédéfinie, en face du récepteur associé à ce canal de données, **caractérisée en ce que** la commutation sur un canal de données d'un émetteur à un autre émetteur s'effectua lorsqu'un angle de rotation prédéfini est dépassé et lorsque sur le canal de données est transmise la donnée "Low", **en ce que** les signaux arrivants sur les canaux de données sont transmis au dispositif de commutation d'émetteurs (34) soit sans retard (x1) soit de façon temporisée (xΔt1) au moyen d'un opérateur à retard, **en ce que** la commutation d'un émetteur (T1) à l'émetteur suivant (T8) est déclenchée par un flanc positif du signal non temporisé, et **en ce que** le signal temporisé est transmis à l'émetteur respectif associé.
